# EUROPEAN PATENT SPECIFICATION

(11) **EP 3 268 102 B1**
(45) Date of publication and mention of the grant of the patent: **12.12.2018**
(21) Application number: 16711061.8
(22) Date of filing: 26.02.2016
(51) Int. Cl.: B01D 15/36, B01J 39/20, B01J 39/26, B01J 20/26, B01J 20/285, C13K 1/00, C13K 11/00

(54) **CHROMATOGRAPHIC SEPARATION OF SACCHARIDES USING STRONG ACID EXCHANGE RESIN INCORPORATING PRECIPITATED BARIUM SULFATE**
CHROMATOGRAPHISCHE TRENNUNG VON SACCHARIDEN MIT EINEM STARKEN SÄUREAUSTAUSCHHARZ MIT PRÄZIPITIERTEM BARIUMSULFAT
SÉPARATION CHROMATOGRAPHIQUE DE SACCHARIDES À L'AIDE DE RÉSINE ÉCHANGEUSE D'ACIDE FORT CONTENANT DU SULFATE DE BARYUM PRÉCIPITÉ

(30) Priority: 12.03.2015 US 201562131905 P
(43) Date of publication of application: 17.01.2018
(73) Proprietor: Dow Global Technologies LLC, Midland, MI 48674 (US)
(72) Inventor: GISCH, Daryl, J., Midland, MI 48674 (US); EICHER, Christopher, R., Midland, MI 48674 (US)
(74) Representative: Houghton, Mark Phillip
(86) International application number: PCT/US2016/019712
(87) International publication number: WO 2016/144568

(56) References cited:
- WO-A1-99/12624
- US-A- 3 044 905
- US-A- 5 221 478
- US-A1- 2012 234 765

## Description

### FIELD

The invention relates the use of strong acid cation exchange resins to chromatographically separate sugars including monosaccharides such as fructose and glucose.

### INTRODUCTION

The current state of the art for chromatographic separation of sugars (e.g. fructose and glucose) utilizes strong acid gel-type ion exchange resins in calcium form (Ca+²). A representative resin is DOWEX™ MONOSPHERE™ 99Ca/320 available from The Dow Chemical Company. See for example US5221478 and US5176832.

Strong acid ion exchange resins in alternative ionic forms have also been described in the literature (e.g. barium, lead, silver and strontium) . See for example US3044905. Concerns regarding residual leakage of such metals have limited their use in food and beverage related applications.

These types of chromatographic resins do not "exchange" ions in the traditional sense. Rather the bound Ca+² ions form ligand interactions with the hydroxyl (-OH) and carbonyl (C=O) groups of sugar molecules. Fructose has more "absorbing" interactions with the Ca+² ions and thus is more strongly retained by the resin as compared with glucose. Fructose with three -OH groups and two C=O groups is classified as a ketone while glucose with four -OH and one C=O groups is classified as an aldehyde. Mechanistically, the negative dipole of the C=O group interacts with the transient positive charge of the resin bound Ca+² ion. In an aqueous environment such interactions are weak and do not involve bond formation or breakage. The proximity of the two C=O groups held by fructose yield the stronger binding of the pair, resulting in a longer retention for fructose as compared to glucose. The chromatographic separation of sugars is a rate-controlled and rate-limited process. The slowest step with a typical gel resin is the "diffusion" of sugar molecules in and out of the resin bead. Slower diffusion kinetics can result from resins having larger bead sizes or non uniform "tightness" (cross-linking). Slower diffusion kinetics yield broader and lower chromatographic peaks, i.e. lower recoveries and higher water usage. For gel resins, lower cross-linking yields faster diffusion kinetics, but bead deformation in larger working beads can lead to high pressure drop and bead breakage. Similarly, smaller size gel resins yield faster diffusion kinetics, but require higher crosslinking to avoid bead breakage. Higher crosslinking levels require even higher operating pressures to load effectively.

### SUMMARY

The invention includes a method for chromatographically separating a first saccharide from a liquid eluent including the first saccharide and a second saccharide by passing the liquid eluent through a bed including a strong acid cation exchange resin in calcium form. The resin is characterized by including precipitated barium sulfate within the resin. The subject resins provide improved resolution in chromatographic separations of saccharides, e.g. fructose and glucose. And, unlike strong acid gel-type exchange resins provided in barium ionic form, the barium present in the subject resins is in the form of precipitated barium sulfate that does not significantly leak from the resin. As a consequence, the subject resins are suitable for many applications including food and beverage.

### DETAILED DESCRIPTION

The invention includes a method for chromatographically separating a first saccharide (analyte) from a liquid eluent including multiple saccharides, (e.g. a first and second saccharide). While the liquid eluent may include a variety of constituents, e.g. monosaccharides, disaccharides, oligosaccharides, organic acids, amino acids, inorganic salts, etc., the first and second saccharides are preferably monosaccharides (e.g. glucose and fructose). For example, in the production of high fructose corn syrup, the liquid eluent typically includes an aqueous mixture of glucose (first saccharide) and fructose (second saccharide) along with various acids and salts. As with traditional chromatographic separations of saccharides, the liquid eluent (mobile phase) passes through a bed or stratum of resin (stationary phase). The set up and operation of the bed is not particularly limited, e.g. moving, simulated moving and stationary beds may be used. Given the nature of the interactions with the resin, the first and second saccharides pass through the resin bed at different rates, thus allowing their separation. For example, fructose (second saccharide) more strongly interacts with the resin as compared with glucose (first saccharide). As a consequence, glucose passes (elutes) through the bed more quickly followed by fructose as a separate product "cut". The individual product cuts can then be collected and used or further treated as is customary in the art.

The resin used in the present invention is a strong acid cation exchange resin in calcium form. The subject resin is provided in bead form having a median diameter from 10 to 2000 microns, and preferably from 100 to 1000 microns, and more preferably from 150 to 500 microns. The beads may have a Gaussian particle size distribution or may have a relatively uniform particle size distribution, i.e. "monodisperse" that is, at least 90 volume percent of the beads have a particle diameter ("uniformity") from about 0.8 to about 1.2, and more preferably 0.85 to 1.15 times the volume average particle diameter. I

Applicable resin may be prepared according to well documented methods including the suspension polymerization at least one monovinyl aromatic monomer (e.g. styrene) and a polyvinyl aromatic crosslinking monomer (e.g. divinylbenzene) to produce a crosslinked copolymer matrix that is subsequently sulfonated and converted to calcium form. The terms "microporous," "gellular," "gel" and "gel-type" are synonyms that describe copolymer particles having pore sizes less than about 20 Angstroms Å. In distinction, macroporous copolymer particles have both mesopores of from about 20 Å to about 500 Å and macropores of greater than about 500 Å. In a preferred embodiment, the resins used in the present invention are gel-type. Gel-type copolymer beads, as well as their preparation are described in US4256840 and US5244926. One preferred method is known in the art as a "seeded" polymerization, sometimes also referred to as batch or multi-batch (as generally described in EP 62088A1 and EP 179133A1); and continuous or semi-continuous staged polymerizations (as generally described in US 4,419,245; US 4,564,644; and US 5,244,926). A seeded polymerization process typically adds monomers in two or more increments. Each increment is followed by complete or substantial polymerization of the monomers therein before adding a subsequent increment. A seeded polymerization is advantageously conducted as a suspension polymerization wherein monomers or mixtures of monomers and seed particles are dispersed and polymerized within a continuous suspending medium. In such a process, staged polymerization is readily accomplished by forming an initial suspension of monomers, wholly or partially polymerizing the monomers to form seed particles, and subsequently adding remaining monomers in one or more increments. Each increment may be added at once or continuously. Due to the insolubility of the monomers in the suspending medium and their solubility within the seed particles, the monomers are imbibed by the seed particles and polymerized therein. Multi-staged polymerization techniques can vary in the amount and type of monomers employed for each stage as well as the polymerizing conditions employed.

The seed particles employed may be prepared by known suspension polymerization techniques. In general the seed particles may be prepared by forming a suspension of a first monomer mixture in an agitated, continuous suspending medium as described by F. Helfferich in Ion Exchange, (McGraw-Hill 1962) at pp. 35-36. The first monomer mixture comprises: 1) a first monovinylidene monomer, 2) a first crosslinking monomer, and 3) an effective amount of a first free-radical initiator. The suspending medium may contain one or more suspending agents commonly employed in the art. Polymerization is initiated by heating the suspension to a temperature of generally from about 50-90°C. The suspension is maintained at such temperature or optionally increased temperatures of about 90-150° C until reaching a desired degree of conversion of monomer to copolymer. Other suitable polymerization methods are described in US 4,444,961; US 4,623,706; US 4,666,673; and US 5,244,926.

The monovinylidene aromatic monomers employed herein are well-known and reference is made to Polymer Processes, edited by Calvin E. Schildknecht, published in 1956 by Interscience Publishers, Inc., New York, Chapter III, "Polymerization in Suspension" at pp. 69-109. Table II (pp. 78-81) of Schildknecht lists diverse types of monomers which are suitable in practicing the present invention. Of the monomers listed, styrene and substituted styrene are preferred. The term "substituted styrene" includes substituents of either/or both the vinylidene group and phenyl group of styrene and include: vinyl naphthalene, alpha alkyl substituted styrene (e.g., alpha methyl styrene) alkylene-substituted styrenes (particularly monoalkyl-substituted styrenes such as vinyltoluene and ethylvinylbenzene) and halo-substituted styrenes, such as bromo or chlorostyrene and vinylbenzyl chloride. Additional monomers may be included along with the monovinylidene aromatic monomers, including monovinylidene non-styrenics such as: esters of α,β-ethylenically unsaturated carboxylic acids, particularly acrylic or methacrylic acid, methyl methacrylate, isobornyl- methacrylate, ethylacrylate, and butadiene, ethylene, propylene, acrylonitrile, and vinyl chloride; and mixtures of one or more of said monomers. Preferred monovinylidene monomers include styrene and substituted styrene such as ethylvinylbenzene. The term "monovinylidene monomer" is intended to include homogeneous monomer mixtures and mixtures of different types of monomers, e.g. styrene and isobornylmethacrylate. The seed polymer component preferably comprises a styrenic content greater than 50 molar percent, and more preferably greater than 75, and in some embodiments greater than 95 molar percent (based upon the total molar content). The term "styrenic content" refers to the quantity of monovinylidene monomer units of styrene and/or substituted styrene utilized to form the copolymer. "Substituted styrene" includes substituents of either/or both the vinylidene group and phenyl group of styrene as described above. In preferred embodiments, the first monomer mixture used to form the first polymer component (e.g. seed) comprises at least 75 molar percent, preferably at least 85 molar percent and in some embodiments at least 95 molar percent of styrene.

Examples of suitable crosslinking monomers (i.e., polyvinylidene compounds) include polyvinylidene aromatics such as divinylbenzene, divinyltoluene, divinylxylene, divinylnaphthalene, trivinylbenzene, divinyldiphenylsulfone, as well as diverse alkylene diacrylates and alkylene dimethacrylates. Preferred crosslinking monomers are divinylbenzene, trivinylbenzene, and ethylene glycol dimethacrylate. The terms "crosslinking agent," "crosslinker" and "crosslinking monomer" are used herein as synonyms and are intended to include both a single species of crosslinking agent along with combinations of different types of crosslinking agents. The proportion of crosslinking monomer in the copolymer seed particles is preferably sufficient to render the particles insoluble in subsequent polymerization steps (and also on conversion to an ion-exchange resin), yet still allow for adequate imbibition of an optional phase-separating diluent and monomers of the second monomer mixture. In some embodiments, no crosslinking monomer will be used. Generally, a suitable amount of crosslinking monomer in the seed particles is minor, i.e., desirably from about 0.01 to about 12 molar percent (more preferably 0.5 to 4 molar percent, and most preferably 1 to 3 molar percent) based on total moles of monomers in the first monomer mixture used to prepare the seed particles. In a preferred embodiment, the first polymer component (e.g. seed) is derived from polymerization of a first monomer mixture comprising at least 85 molar percent of styrene (or substituted styrene such as ethylvinylbenzene) and from 0.01 to about 10 molar percent of divinylbenzene.

Polymerization of the first monomer mixture may be conducted to a point short of substantially complete conversion of the monomers to copolymer or alternatively, to substantially complete conversion. If incomplete conversion is desired, the resulting partially polymerized seed particles advantageously contain a free-radical source therein capable of initiating further polymerization in subsequent polymerization stages. The term "free-radical source" refers to the presence of free-radicals, a residual amount of free-radical initiator or both, which is capable of inducing further polymerization of ethylenically unsaturated monomers. In such an embodiment of the invention, it is preferable that from about 20 to about 95 weight percent of the first monomer mixture, based on weight of the monomers therein, be converted to copolymer and more preferably from about 50 to about 90 weight percent. Due to the presence of the free radical source, the use of a free-radical initiator in a subsequent polymerization stage would be optional. For embodiments where conversion of the first monomer mixture is substantially complete, it may be necessary to use a free-radical initiator in subsequent polymerization stages.

The free-radical initiator may be any one or a combination of conventional initiators for generating free radicals in the polymerization of ethylenically unsaturated monomers. Representative initiators are UV radiation and chemical initiators, such as azo-compounds including azobisisobutyronitrile; and peroxygen compounds such as benzoyl peroxide, t-butylperoctoate, t-butylperbenzoate and isopropylpercarbonate. Other suitable initiators are mentioned in US 4192921, US 4246386 and US 4283499. The free-radical initiators are employed in amounts sufficient to induce polymerization of the monomers in a particular monomer mixture. The amount will vary as those skilled in the art can appreciate and will depend generally on the type of initiators employed, as well as the type and proportion of monomers being polymerized. Generally, an amount of from about 0.02 to about 2 weight percent is adequate, based on total weight of the monomer mixture.

The first monomer mixture used to prepare the seed particles is advantageously suspended within an agitated suspending medium comprising a liquid that is substantially immiscible with the monomers, (e.g. preferably water). Generally, the suspending medium is employed in an amount from about 30 to about 70 and preferably from about 35 to about 50 weight percent based on total weight of the monomer mixture and suspending medium. Various suspending agents are conventionally employed to assist with maintaining a relatively uniform suspension of monomer droplets within the suspending medium. Illustrative suspending agents are gelatin, polyvinyl alcohol, magnesium hydroxide, hydroxyethylcellulose, methylhydroxyethyl cellulose methylcellulose and carboxymethyl methylcellulose. Other suitable suspending agents are disclosed in US 4,419,245. The amount of suspending agent used can vary widely depending on the monomers and suspending agents employed. Latex inhibitors such as sodium dichromate may be used to minimize latex formation.

In the so-called "batch-seeded" process, seed particles comprising from about 10 to about 50 weight percent of the copolymer are preferably suspended within a continuous suspending medium. A second monomer mixture containing a free radical initiator is then added to the suspended seed particles, imbibed thereby, and then polymerized. Although less preferred, the seed particles can be imbibed with the second monomer mixture prior to being suspended in the continuous suspending medium. The second monomer mixture may be added in one amount or in stages. The second monomer mixture is preferably imbibed by the seed particles under conditions such that substantially no polymerization occurs until the mixture is substantially fully imbibed by the seed particles. The time required to substantially imbibe the monomers will vary depending on the copolymer seed composition and the monomers imbibed therein. However, the extent of imbibition can generally be determined by microscopic examination of the seed particles, or suspending media, seed particles and monomer droplets. The second monomer mixture desirably contains from about 0.5 to about 25 molar percent, preferably from about 2 to about 17 molar percent and more preferably 2.5 to about 8.5 molar percent of crosslinking monomer based on total weight of monomers in the second monomer mixture with the balance comprising a monovinylidene monomer; wherein the selection of crosslinking monomer and monovinylidene monomer are the same as those described above with reference to the preparation of the first monomer mixture, (i.e. seed preparation). As with the seed preparation, the preferred monovinylidene monomer includes styrene and/or a substituted styrene. In a preferred embodiment, the second polymer component (i.e. second monomer mixture, or "imbibed" polymer component) has a styrenic content greater than 50 molar percent, and more preferably at least 75 molar percent (based upon the total molar content of the second monomer mixture). In a preferred embodiment, the second polymer component is derived from polymerization of a second monomer mixture comprising at least 75 molar percent of styrene (and/or substituted styrene such as ethylvinylbenzene) and from about 1 to 20 molar percent divinylbenzene.

In an in-situ batch-seeded process, seed particles comprising from about 10 to about 80 weight percent of the copolymer product are initially formed by suspension polymerization of the first monomer mixture. The seed particles can have a free-radical source therein as previously described, which is capable of initiating further polymerization. Optionally, a polymerization initiator can be added with the second monomer mixture where the seed particles do not contain an adequate free radical source or where additional initiator is desired. In this embodiment, seed preparation and subsequent polymerization stages are conducted in-situ within a single reactor. A second monomer mixture is then added to the suspended seed particles, imbibed thereby, and polymerized. The second monomer mixture may be added under polymerizing conditions, but alternatively may be added to the suspending medium under conditions such that substantially no polymerization occurs until the mixture is substantially fully imbibed by the seed particles. The composition of the second monomer mixture preferably corresponds to the description previously given for the batch-seeded embodiment.

The crosslinked copolymer beads are then sulfonated, such as by methods generally described in the literature. See for example: US2500149, US2631127, US2664801, US2764564, US3037052, US3266007, US5248435, US5616622, US2002/002267 and US2004/0006145. In general, sulfonated resins are prepared by reacting the copolymer matrix with a sulfonation agent, such as concentrated sulfuric acid (acid which has at least about 95 weight percent sulfuric acid based upon total weight), oleum, chlorosulfonic acid, or sulfur trioxide, at a temperature and for a time sufficient to achieve a desired degree of sulfonation. A preferred sulfonation agent is concentrated sulfuric acid. The amount of concentrated sulfuric acid should be sufficient to provide adequate mixing during reaction, with a weight ratio of acid to beads of from about 2:1 to about 20:1 being generally sufficient. Typically, the acid and copolymer beads are maintained at a temperature from about 0°C to about 200°C for a time sufficient to obtain resin having a dry weight capacity of at least about 5.0-5.4 milliequivalents per gram (meq/g), e.g. which depending upon the crosslink of the copolymer and resulting hydration level of the specific sulfonated resin would have a wet volume capacity in the 0.5-2.0 meq/ml range.

Sulfonation may be conducted in the presence of a swelling agent. Representative swelling agents include: methylene chloride, ethylene dichloride, dichloropropane, sulfur dioxide, benzene, toluene, xylene, ethylbenzene, isopropylbenzene, chlorobenzene, nitrobenzene, nitromethane, tetrachloroethane and tetrachloroethylene.

Once sulfonated, the resin is further treated with barium hydroxide and sulfuric acid to form a precipitated barium sulfate salt incorporated within the resin. The amount of barium sulfate incorporated into the resin is preferably stoichiometrically related to total weight capacity (e.g. -SO₃⁻ groups) of the resin. Preferred ratios are from 0.5:1 to 1:1 of barium sulfate to -SO₃⁻ groups. A representative (non-stoicheometric) reaction pathway is represented as follows: 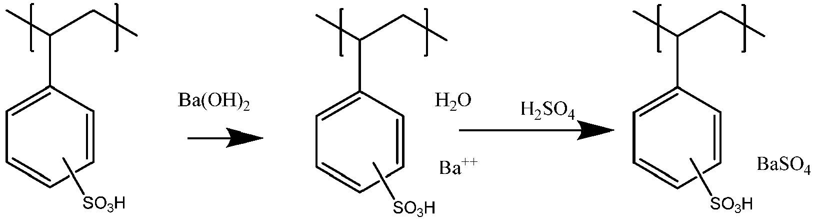 A representative commercial example of such a resin includes DOWEX™ RSC (radium selective complexer) resin available from The Dow Chemical Company. This resin has been commercially available for over 30 years.

The barium sulfate precipitated resin may be subsequently converted from its hydrogen ionic form to a calcium ionic form using standard techniques as used with respect to ion exchange resins. For example, the sulfonated resin may be combined, agitated and soaked within a 1M solution of CaCl₂. The resin may then be optionally soaked within a saturated solution of Ca(OH)₂ followed by optionally pH adjustment, e.g. with a solution of H₃PO₄. The treatment with CaCl₂ may be repeated multiple times to ensure a high level of conversion.

### EXAMPLES

Comparative testing was conducted on three cation exchange resins. All of the resins were strong acid (sulfonated) gel-type based upon a substantially similar styrene-divinylbenzene (2 wt%) crosslinked copolymer matrix originally provided in the hydrogen ionic form, (DOWEX™ N278H). Comparative Resin 1 was converted to the calcium ionic form by mixing the resin in a calcium chloride hexahydrate solution for approximately 30 minutes followed by decanting and repeating three times. The resin was subsequently soaked in a calcium hydroxide solution for four hours and rinsed with deionized water. Comparative Resin 2 was converted to a barium ionic form by soaking the resin in a barium chloride solution (20%) and allowing the mixture to stand for two hours followed by rinsing with deionized water and a repeat mixing with barium chloride. The resin was then recovered and washed with deionized water. Resin 3 was prepared in the same manner as Comparative resin 2, followed by mixing with sulfuric acid (4%) and allowing the mixture to stand for approximately 6 hours followed by rinsing the resin with deionized water. The resin was then converted to the calcium ionic form using the procedure described with respect to Comparative resin 1.

The resin samples were tested to determine their relative ability to resolve high fructose corn syrup into enriched fractions of glucose and fructose. The identity of the resins, various resin parameters and their comparative resolutions ("R") are summarized in Table 1. As demonstrated by the resolutions values provided in Table 1, the subject resins provided improved resolution (R) as compared with substantially similar resins in calcium and barium ionic forms but without precipitated bariums sulfate incorporated into the resin.

Chromatographic testing was conducted using the following pulse testing conditions:

| | |
|---|---|
| Sugar Type | High Fructose Corn Syrup (42% fructose, 50% dissolved sugar) |
| Sugar Pulse Volume (%CV) | 11.5 |
| Flow Rate (BV/hr) | 1.1 |
| Column Temperature (C) | 60° |
| Column Dimensions (mm) | 24.5 x 1219 |
| Total Bed Volume (mL) | 625 |
| Packing | CaCl₂ Pack |

**Table 1:**

| Resin Sample | TEC (meq/ml) (H⁺/X) | WRC (H+) (%) | Total Exch. Capacity (meq/ml) | VMD (µm) | U | Ionic content: Ca⁺²/Ba⁺² | Resolution Glu/Fru (BV: 1.1) |
|---|---|---|---|---|---|---|---|
| *1 (Ca) | 0.78/0.03 | 80.5 | 1.60 | 405 | 1.04 | 67.5/0 | 0.2833 |
| *2 (Ba) | 0.73/0.06 | 80.2 | 1.54 | 328 | 1.04 | 0/45.8 | 0.2663 |
| 3 (Ca-BaSO₄) | 0.71/0.01 | 80.1 | 1.70 | 357 | 1.04 | 53.9/0 | 0.3311 |

| | | | | | | | |
|---|---|---|---|---|---|---|---|
| *Comparison examples. TEC = total exchange capacity. VMD = volume mean diameter. U = bead uniformity. WRC = water retention capacity. | | | | | | | |

## Claims

1. A method for chromatographically separating a first saccharide from a liquid eluent comprising the first saccharide and a second saccharide by passing the liquid eluent through a bed comprising a strong acid cation exchange resin in calcium form, **characterized in that** precipitated barium sulfate is incorporated within the resin.

2. The method of claim 1 wherein the cation exchange resin is a gel-type resin.

3. The method of claim 1 wherein the cation exchange resin is in bead form having a median diameter from 150 to 500 microns.

4. The method of claim 1 wherein the cation exchange resin has a total wet volume capacity of from 0.5 to 1.5 meq/ml.

5. The method of claim 1 wherein the first and second saccharide comprises glucose and fructose, respectively.

## Patentansprüche

1. Ein Verfahren zum chromatographischen Trennen eines ersten Saccharids von einem das erste Saccharid und ein zweites Saccharid beinhaltenden flüssigen Elutionsmittel durch Leiten des flüssigen Elutionsmittels durch ein ein stark saures Kationenaustauschharz in Calciumform beinhaltendes Bett, **dadurch gekennzeichnet, dass** gefälltes Bariumsulfat in das Harz eingebunden ist.

2. Verfahren gemäß Anspruch 1, wobei es sich bei dem Kationenaustauschharz um ein gelartiges Harz handelt.

3. Verfahren gemäß Anspruch 1, wobei das Kationenaustauschharz eine Perlenform mit einem mittleren Durchmesser von 150 bis 500 Mikrometer aufweist.

4. Verfahren gemäß Anspruch 1, wobei das Kationenaustauschharz eine Gesamtkapazität des Nassvolumens von 0,5 bis 1,5 meq/ml aufweist.

5. Verfahren gemäß Anspruch 1, wobei das erste und das zweite Saccharid Glucose bzw. Fructose beinhalten.

## Revendications

1. Un procédé pour séparer par chromatographie un premier saccharide d'un éluant liquide comprenant le premier saccharide et un deuxième saccharide en faisant passer l'éluant liquide à travers un lit comprenant une résine échangeuse de cations à acide fort sous forme de calcium, **caractérisé en ce que** du sulfate de baryum précipité est incorporé au sein de la résine.

2. Le procédé de la revendication 1 dans lequel la résine échangeuse de cations est une résine de type gel.

3. Le procédé de la revendication 1 dans lequel la résine échangeuse de cations est sous forme de billes ayant un diamètre médian allant de 150 à 500 micromètres.

4. Le procédé de la revendication 1 dans lequel la résine échangeuse de cations a une capacité d'échange totale (volume humide) allant de 0,5 à 1,5 mEq/ml.

5. Le procédé de la revendication 1 dans lequel le premier et le deuxième saccharide consistent en du glucose et du fructose, respectivement.
